# EUROPÄISCHE PATENTSCHRIFT

(11) **EP 0 552 452 B1**
(45) Veröffentlichungstag und Bekanntmachung des Hinweises auf die Patenterteilung: **08.03.1995**
(21) Anmeldenummer: 92120901.1
(22) Anmeldetag: 08.12.1992
(51) Int. Cl.: G05D 23/13

(54) **Stellvorrichtung für ein Mischventil**
Actuating device for a mixing valve
Dispositif de commande pour une soupape de mélange

(30) Priorität: 18.12.1991 DE 4141789
(43) Veröffentlichungstag der Anmeldung: 28.07.1993
(73) Patentinhaber: FRIEDRICH GROHE AKTIENGESELLSCHAFT, D-58675 Hemer (DE)
(72) Erfinder: Heimann, Bruno, W-5758 Fröndenberg-Ardey (DE); Frankholz, Christian, W-5840 Schwerte (DE)

(56) Entgegenhaltungen:
- DE-A- 3 530 812
- US-A- 3 685 728
- US-A- 3 765 604
- ENGINEERS DIGEST Bd. 34, Nr. 8, August 1973, LONDON GB Seiten 23 - 27 'circlips and retaining rings'

## Beschreibung

Die Erfindung betrifft eine Sollwerteinstellvorrichtung an einem thermostatisch geregeltem Mischventil für Kalt- und Warmwasser mit einer auf einem feststehenden Kopfstück mittels Gewinde schraubbaren Stellmutter, auf der eine Griffhaube drehfest gehaltert ist, die mit einem feststehenden Anschlagring und einer Skalenanordnung zusammenwirkt, wobei die Griffhaube den Anschlagring umfaßt.
Eine Vorrichtung dieser Gattung ist aus der DE 35 30 812 A1 bekannt. Bei dieser Ausbildung wird bei der Temperatureinstellung der Stellgriff entsprechend der Gewindesteigung am Kopfstück axial zum Mischventil verschoben, was vielfach als nachteilig angesehen wird. Aus der Deutschen Patentschrift 11 64 779 ist zwar bereits eine mit einem Thermostat geregelte Durchlaufmischvorrichtung für Kalt- und Warmwasser mit einem nicht steigenden Betätigungsknopf bekannt geworden. Diese Einrichtung läßt sich aber so gut wie nicht auf eine Sollwerteinstellvorrichtung nach dem Oberbegriff des Patentanspruchs 1 übertragen.

Der Erfindung liegt die Aufgabe zugrunde, die in dem Oberbegriff des Anspruchs 1 angegebene Sollwerteinstellvorrichtung zu verbessern und insbesondere eine nicht steigende Griffanordnung zu schaffen, bei der mit einfachen Mitteln eine axial Sicherung der nicht steigenden Griffhaube auf dem Kopfstück auch gegenüber relativ starken Axialkräften ermöglicht wird.
Diese Aufgabe wird erfindungsgemäß dadurch gelöst, daß die Griffhaube mit einem oder mehreren radial in eine Aufnahme fassende(n) Riegelelemente(n) axial festliegend aber drehbar an dem feststehenden Anschlagring gekoppelt ist und daß der Anschlagring mit einer quer zur Drehachse tangential in eine Ringnut am Kopfstück einschiebbaren, als Klammer ausgebildeten Riegelspange axial auf dem Kopfstück gehalten ist.
Weitere Ausgestaltungen der Erfindung sind in den Ansprüchen 2 bis 7 angegeben.

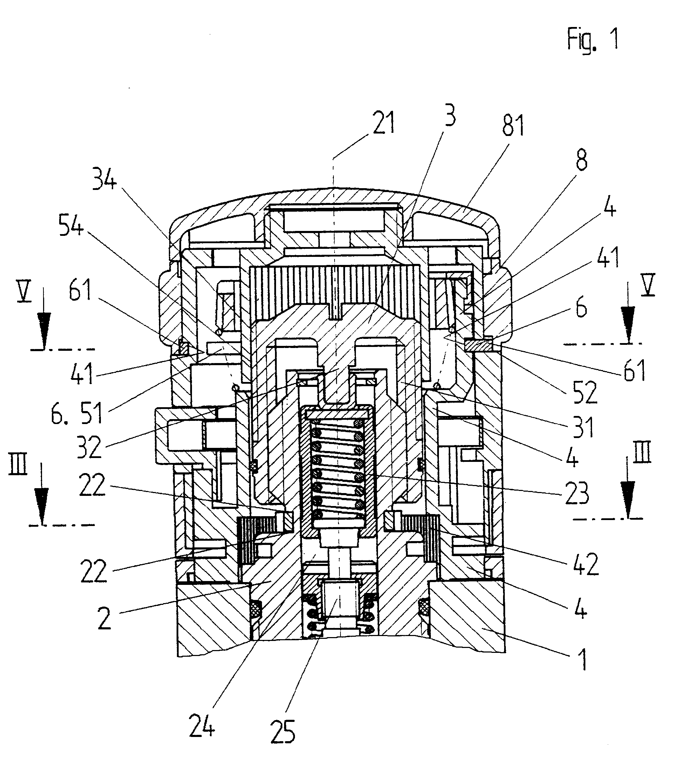

Ein Ausführungsbeispiel der Erfindung ist in der Zeichnung dargestellt und wird im folgenden näher beschrieben. Es zeigt
- Figur 1: eine Sollwerteinstellvorrichtung im Längsschnitt, angeordnet an einem zum Teil dargestellten thermostatisch geregeltem Mischventil;

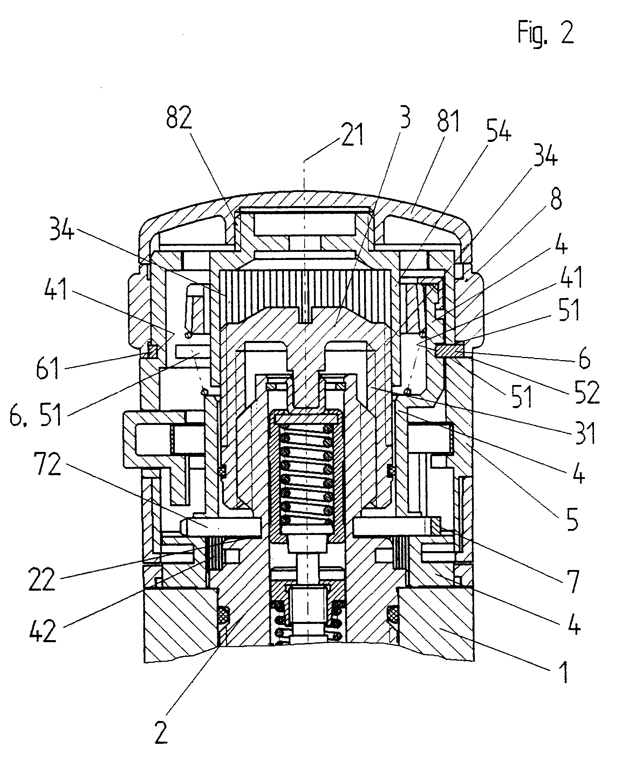

- Figur 2: die Sollwerteinstellvorrichtung gemäß Figur 1 um 90° gedreht;
- Figur 3: die Sollwerteinstellvorrichtung gemäß Figur 1 in der Schnittebene III;
- Figur 4: die in Figur 1 gezeigte Riegelspange in Seitenansicht;

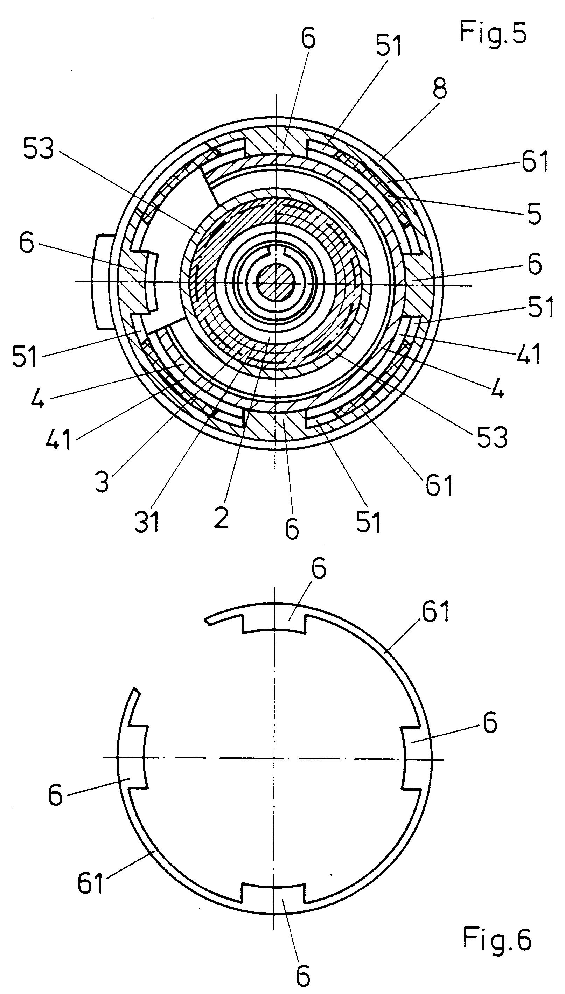

- Figur 5: die in Figur 1 gezeigte Sollwerteinstellvorrichtung in der Schnittebene V;
- Figur 6: den in Figur 1 gezeigten Ring mit den Riegelelementen in Draufsicht.

Die Sollwerteinstellvorrichtung ist mit einem Kopfstück 2 in einer Bohrung eines Gehäuses 1 eines zum Teil dargestellten thermostatisch geregelten Mischventils befestigt. Das Kopfstück 2 ist mittels Gewinde und einem O-Ring dicht in das Gehäuse 1 eingeschraubt. Auf dem vorkragenden Teil des Kopfstücks 2 ist ein Gewinde 31 ausgebildet, auf dem eine Stellmutter 3 durch eine Drehbewegung axial verschiebbar ist. Konzentrisch in der topfartig ausgebildeten Stellmutter 3 ist ein Druckstift 32 ausgebildet, der über eine in einer Bohrung 24 angeordneten Überlastsicherung 23 auf eine Ventilstange 25 einwirkt. Die Ventilstange 25 ist über ein Dehnstoffelement mit einem Doppelsitzventilkörper für die Regulierung der Einströmquerschnitte von Kalt- und Warmwasser verbunden. Das Dehnstoffelement und der Doppelsitzventilkörper ist in der Zeichnung nicht dargestellt.

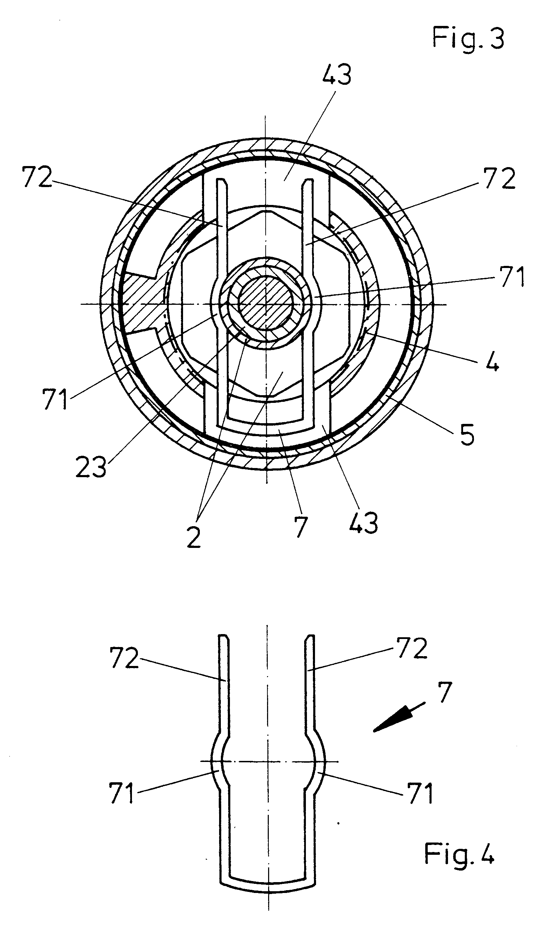

Die Stellmutter 3 ist mit ihrem Außenmantel mit einer Griffhaube 5 über deren Ansatz 54 mittels Riefenverzahnung 34 drehfest aber axial verschiebbar verbunden. Koaxial auf dem Kopfstück 2 ist ein Anschlagring 4 drehfest mit Hilfe einer Riefenverzahnung 42 verbunden. Zur Axialsicherung weist der Anschlagring 4 einen Querschlitz 43 auf, in den eine Riegelspange 7 mit ihren beiden Schenkeln 72 einschiebbar ist. Die Riegelspange 7 weist hierbei, wie insbesondere aus Figur 4 zu entnehmen ist, an beiden Schenkeln 72 gewölbte Bereiche 71 auf, mit denen die Spange 7 in der Stecklage auf dem Kopfstück 2 in einer Ringnut 22 verrastbar ist. Die Riegelspange 7 ist aus Metalldraht etwa u-förmig gebogen. Im vorstehenden Bereich des Anschlagrings 4 ist außerdem eine Ringnut 41 am Außenmantel eingelassen. In diese Ringnut 41 greifen Riegelelemente 6 von außen durch Schlitze 51 in der Wandung der Griffhaube 5 ein. Die Riegelelemente 6 sind dabei als Radialsegmente einstückig an einem aus Kunststoff hergestellten geteilten Ring 61 angeformt. Der Ring 61 liegt hierbei an der Außenwandung der Griffhaube 5 an. Die Riegelelemente 6 bewirken somit in ihrer Stecklage, daß die Griffhaube 5 auf dem Anschlagring 4 drehbar aber axial festgelegt ist. Zur Sicherung der Riegelelemente 6 in ihrer Stecklage ist auf dem vorderen Bereich der Griffhaube 5 eine Griffhülse 8 aufgeschoben, welche einerseits an einer Schulter 52 und andererseits von einer an der Griffhaube 5 befestigbaren Stirnkappe 81 in der Axiallage gehalten wird, so daß der Ring 61 mit den Riegelelementen 6 radial nicht mehr aus der Ringnut 41 herausgleiten kann.
Durch ein Drehen der Griffhaube 5 wird somit die Drehbewegung über den Ansatz 54 und die Riefenverzahnung 34 auf die Stellmutter 3 übertragen, die ihrerseits über das Gewinde 31 entsprechend axial zum Kopfstück 2 und dem Gehäuse 1 des Mischventils verschoben wird und somit eine Stellbewegung auf die Ventilstange 25 überträgt. Die Riegelspange 7 mit dem Querschlitz 43 wird von der Mantelfläche der Griffhaube 5 in der Stecklage verdeckt.
Die Griffhaube 5 ist somit mit Hilfe der Riegelspange 7 und den Riegelelementen 6 gegenüber relativ hohen Axialkräften sicher gehaltert, wobei weder die Riegelelemente 6, noch die Riegelspange 7 von außen für den Benutzer sichtbar sind.
Die Stirnkappe 81 ist dabei zweckmäßig mit Gewinde 82 an der Stirnseite der Griffhaube 5 befestigt, so daß für den Fachmann eine einfache Montage und Demontage der Sollwerteinstellvorrichtung an dem Mischventil ermöglicht ist. Nach dem Entfernen der Stirnkappe 81 kann unmittelbar die Griffhülse 8 abgezogen werden. Danach läßt sich der Ring 61 mit den Riegelelementen 6 radial aus den Schlitzen 51 der Griffhaube 5 entfernen. Nunmehr kann die Griffhaube 5 von dem Anschlagring 4 und der Stellmutter 3 abgezogen werden. Danach ist auch die Riegelspange 7 in dem Querschlitz 43 zugänglich und kann ebenfalls radial von dem Kopfstück 2 abgezogen werden. Nunmehr kann auch der Anschlagring 4 axial vom Kopfstück abgezogen werden. Die Stellmutter 3 kann danach völlig vom Kopfstück abgeschraubt werden. Die Zusammenmontage kann in umgekehrter Reihenfolge erfolgen.

## Patentansprüche

1. Sollwerteinstellvorrichtung an einem thermostatisch geregelten Mischventil für Kalt- und Warmwasser mit einer auf einem feststehenden Kopfstück (2) mittels Gewinde (31) schraubbaren Stellmutter (3), auf der eine Griffhaube (5) drehfest gehaltert ist, die mit einem feststehenden Anschlagring (4) und einer Skalenanordnung zusammenwirkt, wobei die Griffhaube (5) den Anschlagring (4) umfaßt, dadurch gekennzeichnet, daß die Griffhaube (5) mit einem oder mehreren radial in eine Aufnahme fassende(n) Riegelelemente(n) (6) axial festliegend aber drehbar an dem feststehenden Anschlagring (4) gekoppelt ist und daß der Anschlagring (4) mit einer quer zur Drehachse (21) tangential in eine Ringnut (22) am Kopfstück (2) einschiebbaren, als Klammer ausgebildeten Riegelspange (7) axial auf dem Kopfstück (2) gehalten ist.

2. Sollwerteinstellvorrichtung nach Anspruch 1, dadurch gekennzeichnet, daß die Riegelspange (7) aus Metalldraht hergestellt ist und zur radialen Halterung der Stecklage entsprechend der Ringnut (22) bewölbte Bereiche (71) an den beiden Schenkeln (72) aufweist.

3. Sollwerteinstellvorrichtung nach Anspruch 1 oder 2, dadurch gekennzeichnet, daß die Riegelelemente (6) an einem geteilten Ring (61) angeordnet sind.

4. Sollwerteinstellvorrichtung nach Anspruch 3, dadurch gekennzeichnet, daß die Riegelelemente (6) mit dem Ring (61) einstückig aus Kunststoff hergestellt sind.

5. Sollwerteinstellvorrichtung nach einem der Ansprüche 1 bis 4, dadurch gekennzeichnet, daß die Riegelelemente (6) und die Riegelspange (7) von der Griffhaube (5) und/oder einer auf der Griffhaube (5) angeordneten Griffhülse (8) verdeckt sind.

6. Sollwerteinstellvorrichtung nach einem der Ansprüche 1 bis 5, dadurch gekennzeichnet, daß die Riegelelemente (6) am Ring (61) als Radialsegmente ausgebildet und in der Griffhaube (5) entsprechende Schlitze (51) vorgesehen sind, wobei der Ring (61) am Außenmantel der Griffhaube (5) anliegt und die Riegelelemente durch die Schlitze (51) in eine Ringnut (41) des Anschlagrings (4) fassen, während der Ring (61) am Außenbereich von einer auf die Griffhaube (5) aufschiebbaren Griffhülse (8) in seiner Sicherungsposition gehalten ist.

7. Sollwerteinstellvorrichtung nach Anspruch 6, dadurch gekennzeichnet, daß die Griffhülse (8) einerseits von einer Schulter (52) der Griffhaube (5) und andererseits von einer befestigbaren Stirnkappe (81) in ihrer Axiallage gehalten ist.

## Claims

1. Desired value setting device for a thermostatically controlled mixing valve for cold and hot water, having an adjusting nut (3) that can be screwed on a fixed-position head part (2) by means of a screw thread (31) and on which there is non-rotatably secured a grip cap (5) which co-operates with a fixed-position stop ring (4) and a scale arrangement, the grip cap (5) surrounding the stop ring (4), characterised in that the grip cap (5) is coupled to the fixed-position stop ring (4), by one or more locking element(s) (6) engaging radially in a socket, so as to be fixed in an axial direction but rotatable, and that the stop ring (4) is held axially on the head part (2) by a locking clamp (7) which is in the form of a clip and is arranged to be pushed tangentially, transversely to the rotation axis (21), into an annular groove (22) on the head part (2).

2. Desired value setting device according to claim 1, characterised in that the locking clamp (7) is produced from metal wire and for radially maintaining the engaged position has curved regions (71), corresponding to the annular groove (22), on the two limbs (72).

3. Desired value setting device according to claim 1 or 2, characterised in that the locking elements (6) are arranged on a divided ring (61).

4. Desired value setting device according to claim 3, characterised in that the locking elements (6) are produced in one piece with the ring (61) from plastics material.

5. Desired value setting device according to one of claims 1 to 4, characterised in that the locking elements (6) and the locking clamp (7) are covered over by the grip cap (5) and/or a grip sleeve (8) arranged on the grip cap (5).

6. Desired value setting device according to one of claims 1 to 5, characterised in that the locking elements (6) are formed on the ring (61) as radial segments, and corresponding slots (51) are provided in the grip cap (5), the ring (61) bearing against the outer surface of the grip cap (5), and the locking elements engaging through the slots (51) in an annular groove (41) of the stop ring (4), while the ring (61), on the outside, is held in its securing position by a grip sleeve (8) arranged to be pushed onto the grip cap (5).

7. Desired value setting device according to claim 6, characterised in that the grip sleeve (8) is held in its axial position on the one hand by a shoulder (52) of the grip cap (5) and on the other hand by a fastenable end cap (81).

## Revendications

1. Dispositif de réglage d'une valeur de consigne d'une soupape de mitigeur thermostatique pour l'eau froide et l'eau chaude, comportant un écrou de réglage (3) qui se visse par un filetage (31) sur une tête (2) fixe, et reçoit solidairement en rotation un capuchon formant poignée (5) coopérant avec une bague de butée (4) fixe et une graduation, le capuchon formant poignée (5) entourant la bague de butée (4), caractérisé en ce que le capuchon formant poignée (5) est couplé par un ou plusieurs éléments de verrouillage, (6) radiaux, venant dans un logement, en étant bloqués axialement mais libres en rotation sur la bague de butée (4), fixe, et en ce que la bague de butée (4) est maintenue axialement sur la tête (2) par une bague de verrouillage (7) en forme de pince, qui se glisse transversalement à l'axe de rotation (21), tangentiellement dans une rainure annulaire (22) de la tête (2).

2. Dispositif de réglage d'une valeur de consigne d'une soupape de mitigeur thermostatique pour l'eau froide et l'eau chaude selon la revendication 1, caractérisé en ce que la bague de verrouillage (7) est en fil métallique et comporte sur ses deux branches (72), des zones bombées (71) en fonction de la rainure annulaire (22) pour la fixation radiale de la position engagée.

3. Dispositif de réglage d'une valeur de consigne d'une soupape de mitigeur thermostatique pour l'eau froide et l'eau chaude selon la revendication 1 ou 2, caractérisé en ce que les éléments de verrouillage (6) sont prévus sur une bague divisée (61).

4. Dispositif de réglage d'une valeur de consigne d'une soupape de mitigeur thermostatique pour l'eau froide et l'eau chaude selon la revendication 3, caractérisé en ce que les éléments de verrouillage (6) sont réalisés en une seule pièce en matière synthétique sur la bague (61).

5. Dispositif de réglage d'une valeur de consigne d'une soupape de mitigeur thermostatique pour l'eau froide et l'eau chaude selon l'une des revendications 1 à 4, caractérisé en ce que les éléments de verrouillage (6) et l'anneau de verrouillage (7) sont cachés par le capuchon formant poignée (5) et/ou une douille formant poignée (8) montée sur le capuchon (5).

6. Dispositif de réglage d'une valeur de consigne d'une soupape de mitigeur thermostatique pour l'eau froide et l'eau chaude selon l'une des revendications 1 à 5, caractérisé en ce que les éléments de verrouillage (6) sont réalisés sur la bague (61) sous la forme de segments radiaux et le capuchon formant poignée (5) comporte les fentes correspondantes (51), l'anneau (61) s'appuyant sur l'enveloppe extérieure du capuchon formant poignée (5) et les éléments de verrouillage venant prendre à travers les fentes (51) dans une rainure annulaire (41) de la bague formant butée (4) pendant que l'anneau (61) est maintenu en position de sécurité, dans la zone extérieure d'une douille (8) formant poignée emmanchée sur le capuchon formant poignée (5).

7. Dispositif de réglage d'une valeur de consigne d'une soupape de mitigeur thermostatique pour l'eau froide et l'eau chaude selon la revendication 6, caractérisé en ce que la douille formant poignée (8) est maintenue en position axiale, d'une part, par un épaulement (52) du capuchon formant poignée (5), et, d'autre part, par un couvercle frontal (81) susceptible d'être fixé.
